# EUROPÄISCHE PATENTSCHRIFT

(11) **EP 2 370 287 B1**
(45) Veröffentlichungstag und Bekanntmachung des Hinweises auf die Patenterteilung: **05.09.2012**
(21) Anmeldenummer: 09777981.3
(22) Anmeldetag: 19.08.2009
(51) Int. Cl.: B60K 17/10, B60K 17/16, B60K 17/348, B60W 10/12, B60K 23/04, F16D 31/00

(54) **GETRIEBEANORDNUNG**
TRANSMISSION ARRANGEMENT
SYSTÈME DE TRANSMISSION

(30) Priorität: 26.11.2008 DE 102008059126; 06.05.2009 DE 102009020089
(43) Veröffentlichungstag der Anmeldung: 05.10.2011
(73) Patentinhaber: Müller, Werner, 79805 Eggingen (DE)
(72) Erfinder: Müller, Werner, 79805 Eggingen (DE)
(74) Vertreter: Maucher, Wolfgang
(86) Internationale Anmeldenummer: PCT/EP2009/006017
(87) Internationale Veröffentlichungsnummer: WO 2010/060495

(56) Entgegenhaltungen:
- EP-A- 0 167 043
- EP-A- 0 398 124
- AT-U1- 6 549
- DE-A1- 3 816 760
- DE-A1- 4 138 074
- DE-A1- 19 504 451
- DE-A1- 19 708 968

## Beschreibung

Die Erfindung betrifft eine Getriebeanordnung, welche an einem Antriebsstrang eines Landfahrzeugs oder dergleichen Fortbewegungsmittels angeordnet ist, das eine Mehrzahl von Rädern aufweist, von denen wenigstens zwei antreibbar sind, welche mit wenigstens einem Verzweigungsgetriebe versehen ist, das jedes der antreibbaren Räder einzeln antreibt oder bremst, und welcher eine Sensoreinrichtung mit wenigstens einem Sensor und eine Steuereinrichtung zugeordnet ist, die anhand von durch die Sensoreinrichtung erfassten, durch Lenkmanipulation bei der Fortbewegung des Fahrzeugs verursachten Werten das Verzweigungsgetriebe derart steuert, dass jedes Rad mit einer Drehzahl angetrieben wird, bei welcher es unter Beibehaltung des Drehmoments schlupffrei und geometrisch korrekt abläuft, wobei an einer angetriebenen Achse des Fahrzeugs wenigstens ein mit dem Antriebsstrang verbundenes, und um zumindest eine einem Rad zugeordnete Achswelle drehbares Hubgehäuse vorgesehen ist, welches einen im wesentlichen kreisförmigen oder elliptischen Außenumfang aufweist, wobei das wenigstens eine Hubgehäuse an seinem Innenrand eine Mehrzahl von durch den sich ändernden Querschnitt des Innenrandes des Hubgehäuses gebildete Nocken aufweist, die durch die Drehbewegung des Hubgehäuses eine Mehrzahl von mit der jeweiligen Achswelle über einen diese umgreifenden Rotor verbundene Kolben-Zylinder-Anordnungen antreiben, und wobei die Kolben-Zylinder-Anordnungen über, in den Rotoren vorgesehene sowie Druck- und Saugventile aufweisende Druck- und Saugkanäle derart miteinander verbunden sind, dass mittels der Kolben-Zylinder-Anordnungen bei einer torsionalen Relativbewegung zwischen Hubgehäuse und Rotor der Getriebeanordnung oder einer Relativbewegung zweier Rotoren zueinander Flüssigkeit entweder förderbar oder ansaugbar ist.

Derartige Getriebeanordnungen sind bereits seit dem Altertum bekannt, überdies wurde schon im 19. Jahrhundert von Pecqueur ein Fahrzeugdifferential vorgestellt, das im Grunde bis heute bei allen radangetriebenen, mit Antriebsachsen ausgestatteten Fahrzeugen Verwendung findet und in verschiedene Richtungen ständig weiter entwickelt wird.

Im hydrostatischen Bereich sind beispielsweise Getriebeanordnungen aus der DE 222 301 oder der DE 40 10 764 bekannt, wobei letztere auf dem Pumpenprinzip mit Schrägscheibe basiert. Diese Bauart hat den Nachteil, dass das maximal anwendbare Drehmoment mit einer axialen Anordnung der Kolben relativ klein ist. Der maximale Schwenkwinkel der Schrägscheibe ist gleich dem maximalen Anlaufwinkel der Kolbengleiter. Bei der Schrägscheibenbäuart liegt der maximale Anstellwinkel lediglich im Bereich von 30°. Überdies wird der Vorteil einer axialen Bauweise, hohe Drehzahlen verarbeiten zu können, weder im Hinterachsbereich noch im Antriebsstrang des Fahrzeugs mit der geforderten Effektivität genutzt, da die Dynamik der Pumpen nur bei einer Relativbewegung der Verzweigung zueinander genutzt wird und dabei hohe Drehmomente und niedrige Drehzahlen abverlangt werden. Des weiteren sind bei der erwähnten Getriebeanordnung die beiden Pumpeneinheiten voneinander getrennt und mit Fluidleitungen verbunden, wodurch zwar ein steuerbares Differential realisiert werden kann, die Räder aber nicht einzeln angetrieben werden können. Eine Getriebeanordnung mit Fluidpumpe ist schließlich auch aus der DE 195 17 801 bekannt.

Aus der DE 41 38 074 A, die den Obergriff des Anspruchs 1 bildet, kennt man bereits eine Getriebeanordnung, die an einem Antriebsstrang eines Landfahrzeuges oder dergleichen Fortbewegungsmittels angeordnet ist. Dieses Fortbewegungsmittel weist eine Mehrzahl von Rädern auf, von denen wenigstens zwei antreibbar sind. Die Getriebeanordnung ist mit wenigstens einem Verzweigungsgetriebe versehen, welches jedes der antreibbaren Räder einzeln antreibt oder bremst. Die Getriebeanordnung ist eine Sensoreinrichtung mit wenigstens einem Sensor und eine Steuereinrichtung zugeordnet, die anhand von, durch die Sensoreinrichtung erfassten, durch Lenkmanipulationen bei der Fortbewegung des Fortbewegungsmittels verursachten Werten das Verzweigungsgetriebe derart steuert, dass jedes Rad mit einer Drehzahl angetrieben wird, bei welcher es unter Beibehaltung des Drehmoments schlupffrei und geometrisch korrekt abläuft.

Dabei ist an einer angetriebenen Achse des Fortbewegungsmittels wenigstens ein, mit dem Antriebsstrang verbundenes, um zumindest eine, einem Rad zugeordnete Achswelle drehbares Hubgehäuse vorgesehen, welches einen im wesentlichen kreisförmigen oder elliptischen Außenumfang aufweist. Das Hubgehäuse weist an seinem Innenrand eine Mehrzahl von, durch den sich ändernden Querschnitt des Innenrandes des Hubgehäuses gebildeten Nocken auf, die durch die Drehbewegung des Hubgehäuses eine Mehrzahl von mit der jeweiligen Achswelle über einen diese umgreifenden Rotor verbundene Kolben-Zylinder-Anordnung antreiben. Diese Kolben-Zylinder-Anordnungen sind über, in den Rotoren vorgesehene und Druck- sowie Saugventile aufweisende Druck- und Saugkanäle derart miteinander verbunden, dass mittels der Kolben der Kolben-Zylinder-Anordnungen bei einer torsionalen Relativbewegung zwischen Hubgehäuse und Rotor der Getriebeanordnung oder einer Relativbewegung zweier Rotoren zueinander Flüssigkeit entweder förderbar oder ansaugbar ist.

Da bei der aus DE 41 38 074 A vorbekannten Getriebeanordnung die Druck- und Saugkanäle radial zur Achswelle angeordnet sind, sind auch die Druck- und Saugkanäle radial eingebaut. Der Nachteil einer radialen Anordnung liegt darin, dass sich die auftretenden Zentrifugalkräfte negativ auf das Steuerverhalten auswirken. So wird bei einem Kugelgewicht eines Saugventils von beispielsweise 1,4 Gramm bei einer Drehzahl von 3000 1/min eine Gewichtskraft 6,9 N generiert. Dieser Kraft muß mit einer Feder entgegengewirkt werden. Da die Federkraft außerhalb einer möglichen Resonanz gewählt werden muß, erhöht sich die Federkraft auf 15 N. Bei einer Ventilsitzfläche von 20 qmm ist dann ein Öffnungsdruck von 7,5 bar erforderlich. Dieser Druck muß überwunden werden, bevor das System eine Funktion übernehmen kann. Da die aus DE 41 38 074 A vorbekannte Getriebeanordnung mechanische Steuerbauteile sowie Schrittmotoren benötigt, weist diese mechanische Steuerungsübertragung in Verbindung mit der oben erwähnten radialen Anordnung der Druck- und Saugventile eine vergleichsweise geringe Steuergenauigkeit aus.

Es ist die Aufgabe der vorliegenden Erfindung, mittels einer Getriebeanordnung eine Verbindung zwischen einem Antriebsmotor und den angetriebenen Rädern eines Fahrzeugs herzustellen und zu verzweigen, die es sowohl im Antriebs- als auch im Bremsmodus gestattet, jedes Rad einzeln hinsichtlich Drehzahl und Drehmoment zu steuern und unabhängig von unterschiedlichen Reibungskoeffizienten zwischen Reifen und deren Aufstandsflächen anzutreiben und zu verzögern, wobei sich die erfindungsgemäße Getriebeanordnung durch eine einfache Konstruktion und eine hohe Steuergenauigkeit auszeichnen soll.

Die erfindungsgemäße Lösung dieser Aufgabe sieht bei der Getriebeanordnung der eingangs erwähnten Art vor, dass die an den Druck- und Saugkanälen vorgesehenen Druck- und Saugventile mit zugeordneten Kugeln Rückschlagventile bilden, welche Kugeln in axialen Bohrungen der Druck- und Saugkanäle geführt sind, dass die Rotoren von Druck- und Saugkanälen zumindest teilweise entlang von deren Längserstreckung durchgriffen sind, dass an der einem axialen Mittelstück des Rotors zugewandten Stirnseite des Zylinders jeder Kolben-Zylinder-Anordnung zwei Öffnungen zum Anschluss an je einen Druck- und einen Saugkanal vorgesehen sind und dass in einem Hohlraum des axialen Mittelstücks ein elektrisches Proportionalventil vorgesehen ist, dass die im Hohlraum mündenden Druck- und Saugkanäle zu jeweils einem Kanal verbindet.

Die erfindungsgemäße Getriebeanordnung zeichnet sich dadurch aus, dass die etwa beim Durchfahren einer Kurve erforderliche Drehzahldifferenz der Räder einer oder mehrerer Achsen oder eines Antriebsstranges nicht durch die unterschiedlich wirkenden Drehmomente über ein Ausgleichsgetriebe, also ein Differenzial ausgeglichen wird, sondern über ein Verzweigungsgetriebe, dass jedes Rad einzeln antreibt oder abbremst. Bei einem Lenkeinschlag werden dabei die von den einzelnen Rädern zu durchlaufenden Wegstrecken berechnet und die Drehzahl der Kurven inneren Räder wird um den Wert reduziert, der jedem Rad ein schlupffreies und geometrisch richtiges Ablaufen unter Beibehaltung des Drehmoments und der erfindungsgemäßen Beeinflussung des Lenkverhaltens und der Fahrstabilität ermöglicht, wodurch die energie- und produktionswirtschaftlich Bilanz eines mit einer solchen Getriebeanordnung versehenen Fahrzeugs gleich oder besser als mit "rein" mechanischen Antrieb ist. Die relativen Veränderungen der Raddrehzahlen sind immer das Ergebnis errechneter Werte, sie sind unabhängig von unterschiedlichen Reibungskoeffizienten zwischen Reifen und Reifenaufstandsfläche.

Hierbei kann bei einer Weiterbildung der Getriebeanordnung jeder einem Rad zugeordneten Achswelle, bzw. jeder Achswelle mit angetriebenen Rädern, ein eigenes drehbares Hubgehäuse zugeordnet sein, wobei dann die Hubgehäuse jeweils einer Achse mit der gleichen Drehzahl angetrieben sind.

Eine bevorzugte Weiterbildung der Getriebeanordnung kann aber auch darin bestehen, dass den Rädern einer angetriebenen Achse ein gemeinsames Hubgehäuse zugeordnet ist.

Bei einer bevorzugten Weiterbildung der Getriebenanordnung treiben die Nocken durch die Drehbewegung des Hubgehäuses eine Mehrzahl von mit der jeweiligen Achswelle über einen diese umgreifenden Rotor verbundene Kolben-Zylinder-Anordnungen an.

Besonders bevorzugt ist die Form der Nocken dabei derart vorgesehen, dass der Umsatz von kinetischer Energie in hydraulische Energie minimal ist.

Um auf die Kolben der Kolben-Zylinder-Anordnungen einen Speisedruck ausüben zu können sind bei einer zweckmäßigen Weiterbildung der Getriebeanordnung die Kolben-Zylinder-Anordnungen über Verbindungseinrichtungen mit einem Reservoir verbunden, in welchem eine hydraulische Flüssigkeit vorgehalten ist.

Bevorzugt sind dabei die Verbindungseinrichtungen als die Rotoren zumindest teilweise entlang von deren Längserstreckung durchgreifende Druck- und Saugkanäle ausgebildet sind, so dass die Kolben der Kolben-Zylinder-Anordnungen bei einer torsionalen Relativbewegung zwischen Hubgehäuse und Rotor der Getriebeanordnung oder einer Relativbewegung zweier Rotoren zueinander entweder Flüssigkeit fördern oder ansaugen können. Die Anordnung der Verbindungseinrichtungen ist dabei in nicht unerheblichem Maß vom Einsatzzweck, und damit verbunden mit der notwendigerweise zu erreichenden Geschwindigkeit des Landfahrzeugs verknüpft. So können die Druck und Saugkanäle sowohl radial als auch axial angeordnet sein, je nach dem welche Größe der Rotor hat. Bei großen Rotoren, die auch langsamer laufen, ist es von Vorteil, die betreffenden Kanäle radial anzuordnen. Bei einer solchen Ausführung können die Herstellungskosten durch gemeinsame Arbeitsgänge bei der Fertigung der Zylinderbohrungen gesenkt werden. Bei schnell laufenden Rotoren werden demgegenüber zur Aufrechterhaltung der Funktion der Ventile lieber axiale Bohrungen eingesetzt, bei den Kugeln sich in diesen Bohrungen abrollende Kugeln Rückschlagventile bilden.

Besonders bevorzugt können die Verbindungseinrichtungen über ein Steuermittel, beispielsweise eine Steuerscheibe manipulierbar sein, so dass sie zu einem Saug- und einem Druckkanal zusammenfassbar sind, wobei die Saug- und die Druckseite mit der Drehrichtung wechseln.

Um die Fluidkanäle von Saug- und Druckseite bei dieser Ausführungsform einfach zusammenfassen bzw. zusammenführen zu können, ist das axiale Mittelstück als im wesentlichen röhrenartiger Hohlraum des Rotors vorgesehen ist, der einen Abschnitt aufweist, in welchem im wesentlichen radial, insbesondere sternförmig verlaufende Endstücke der Druck- und der Saugkanäle münden, wodurch eine besonders kompakte Bauweise der Getriebeanordnung erreicht wird.

Zweckmäßigerweise können hierbei die Mündungsöffnungen der Endstücke der Druckkanäle und der Saugkanäle jeweils in einer Ebene liegend angeordnet sein und die Ebenen voneinander axial beanstandet sind, wodurch sich die Druck- und die Saugseite der Getriebeanordnung mit einfachen mechanischen Hilfsmitteln gut steuern lässt.

Wird bei Ausführungsform zur Drehzahlmanipulation eine Menge hydraulischen Fluids zwischen Druck- und Saugkanal eines Rotors ausgetauscht, so sind zur Herstellung und Sperrung der Verbindung zwischen Druckkanal und Saugkanal des Rotors weder weitere Verbindungsleitungen notwendig, noch kommt es hierbei zu Quetschverlusten an Steuerscheiben. Überdies werden bei einer solchen Ausführung, da sich der komplette Rotor mit der Drehzahl der Achswelle dreht, ohne dass es zu einer torsionalen Verschiebung innerhalb des Rotors käme, in der Regel auch keine Rotationsdichtelemente als dynamische Abdichtungen benötigt.

Bei einer anderen besonders vorteilhaften Ausführungsform der Getriebeanordnung können überdies Druck- und Saugkanal eines Rotors über einen hydraulischen Mengenregler miteinander verbindbar sein, der die Verbindung der beiden Kanäle sperrt oder öffnet und anhand der Steuereinrichtung für den notwendigen Austausch einer berechneten Fluidmenge zur Manipulation der Drehzahl des Rades sorgt.

Bei zweckmäßigen Weiterbildungen der erfindungsgemäßen Getriebeanordnung können zum einen die Verbindungseinrichtungen mit wenigstens einem Sensor, insbesondere einem Drucksensor, zur Erfassung des an dem jeweiligen Rad anliegenden Drehmoments versehen sein, zum anderen kann im Bereich jedes Rotors wenigstens ein Sensor zur Erfassung der Drehzahl des jeweiligen Rotors vorgesehen sein. Somit kann die Drehzahl und das Drehmoment jedes einzelnen Rades erfasst werden. Die elektronische Steuerung erkennt somit unterschiedliche Drehmomente an den Rädern obwohl diese noch mit gleicher Drehzahl arbeiten. Zum Beispiel beim Fahren am Hang, in Schichtlinie oder bei Seitenwind. Obwohl der Fahrer das Lenkrad nicht verändert fährt das Fahrzeug auch bei extremem Seitenwind geradeaus.

Bei einer weiteren Ausführung der erfindungsgemäßen Getriebeanordnung sind die einer gemeinsamen Achse zugeordneten Räder derart angetrieben, dass die Summe der Drehzahlen der Räder einer Achse oder eines Antriebsstranges nicht notwendigerweise identisch mit der doppelten Drehzahl des Hubgehäuses ist. Antriebsstrang meint in diesem Zusammenhang, dass auch Räder gemeinsam angetrieben werden können, die nicht einer gemeinsamen Achse zugeordnet sind, also beispielsweise zwei Räder der gleichen Fahrzeugseite, wie es für bestimmte Lenkungsarten durchaus sinnvoll sein kann.

Zweckmäßigerweise sind dabei die Drehzahlen einzelner Räder, von Rädern einer Achse oder einer Fahrzeugseite oder aller Räder durch eine Bedienperson oder ein hierfür vorgesehenes Computerprogrammprodukt manipulierbar. Das relative Drehzahlspektrum erstreckt sich dabei von gleich der Drehzahl des Hubgehäuses bis zum Achswellenstillstand ohne dass das System mit Druckflüssigkeit versorgt werden muss. Die Summe der Raddrehzahlen einer Achse ist dabei ungleich der doppelten Drehzahl des Hubgehäuses. Bei einer Versorgung mit Druckflüssigkeit ist auch eine Drehzahl größer des Hubgehäuses möglich. Die Drehzahlen der einzelnen Räder sind somit vom Konstrukteur, oder auch in besonderen Fällen vom Fahrer, den Gegebenheiten oder auch der Situation angepasst, frei definierbar. Es können beispielsweise bei einer Kurvenfahrt alle Räder mit genau der Drehzahl betrieben werden, die zum Ablaufen der theoretischen Ablauflinie nötig ist, es könnten aber auch nur die äußeren Räder angetrieben werden. Durch diese Manipulierbarkeit der Antriebe ergeben sich im Fahrzeugsektor völlig neue Möglichkeiten der Fahrstabilisierung und die Voraussetzung eines echten Allradantriebes der auch bei niedrigen Drehzahlen des Rades und unabhängig der Reibungskoeffizienten zwischen Rad und Radaufstandsfläche eine gleichmäßige Drehung aller Räder ermöglicht, ohne in das Bremssystem eingreifen zu müssen. Gleiches gilt bei unterschiedlichen Fahrbahnbeschaffenheiten oder extremen Hanglagen die zu sehr unterschiedlichen Radlasten führen. Bei einer kreisförmigen Fahrt am Hang, beispielsweise, ergeben sich je nach Lenkungsart zwei oder vier Ablauflinien, wobei die Belastung der Räder an keinem Punkt der Ablauflinien gleich ist, sondern sich ständig ändert. Ohne die Beweglichkeit des Fahrzeuges einzuschränken, treibt die erfindungsgemäße Einrichtung jedes Rad mit der maximal möglichen Traktion an. Tritt Schlupf in Folge einer Überlastung in der Summe der Radaufstandspunke ein, so ist der Schlupf, ohne eine eventuell eintretende Drift zu berücksichtigen, an allen Rädern gleich. Ein Durchdrehen eines einzelnen Rades ist bei bestimmungsgemäßer Programmierung nicht möglich.

Da die erfindungsgemäße Getriebeanordnung im Prinzip auch die Einzelradbremsen an dem Fahrzeug überflüssig macht, kann eine Weiterbildung darin bestehen, dass an dem Fahrzeug wenigstens eine, einer oder mehreren Achsen zugeordnete Bremseinrichtung am Antriebsstrang angeordnet ist, welche bevorzugt die einzige Bremseinrichtung des Fahrzeugs bildet.

Bei einer Weiterbildung von gegebenenfalls eigenständiger erfinderischer Bedeutung weist an der Getriebeanordnung die Bremseinrichtung wenigstens eine, zumindest einer angetriebenen Achse zugeordnete, in einem dieser Achse zugeordneten Bereich des Antriebsstrangs angeordnete Betriebsbremse auf. Da die Verteilung der Drehzahlen an die Achswellen rechts und links kontrolliert erfolgt, kann das Fahrzeug mit einer als Getriebebremse ausgebildeten Betriebsbremse betrieben und demnach über den Antriebsstrang gebremst werden, ohne dass es bei einem Bremsvorgang zu unkontrolliertem Verhalten der Räder käme. Dabei ist es von nicht zu unterschätzendem Wert für die Lebensdauer der Bremse und die mit ihrem Betrieb verbundene Wartung, dass das abzubremsende Drehmoment im Bereich des Getriebeausgangs etwa drei- bis fünfmal geringer ist, als im Bereich des Rades selbst, es treten bei einer beispielsweise fluidgekühlten Getriebebremse deutlich geringere rotierende Massen auf. Weiter ist eine solche Bremse praktisch wartungsfrei und es wird auch kein Bremsstaub freigesetzt. In auch produktionstechnisch zweckmäßiger Weise kann eine derartige Getriebebremse in die Getriebeanordnung integriert sein und so vorteilhaft für ein Fahrzeug ein bereits fertig montiertes Bauteil bilden.

Vorteilhafte Weiterbildungen der Getriebeanordnung mit Getriebebremse können überdies darin bestehen, dass die Bremseinrichtung für jede angetriebene Achse in dem zugeordneten Bereich des Antriebsstrangs eine Betriebsbremse aufweist oder die Bremseinrichtung eine Feststellbremse aufweist, die an einer Achse des Fahrzeugs im Bereich des dieser Achse zugeordneten Verzweigungsgetriebes angeordnet ist.

Um die bei einem Bremsvorgang anfallende Bremsenergie an einem konstruktiv günstigen Punkt aufnehmen zu können kann bei einer Ausführung der Getriebeanordnung im Bereich der Bremseinrichtung ein Aufnahmemittel zur Aufnahme und gegebenenfalls Speicherung und Weiterleitung der Energie vorgesehen sein.

Bevorzugt kann die Bremseinrichtung durch eine fluidgekühlte Scheibenbremse gebildet sein.

Die erfindungsgemäße Getriebeanordnung lässt sich vorteilhaft insbesondere bei einem Achsgetriebe, einem Verteilergetriebe, einem insbesondere stufenlosen Untersetzungsgetriebe, als eine Kupplung oder als Drehmomentverstärker einsetzen. Gegenüber dem heutigen, bei Fahrzeugen zum Einsatz kommenden Differenzial ist die Getriebenanordnung energieneutral, der Wirkungsgrad ist gleich, die Flexibilität ungleich größer als die eines mechanischen Antriebes. Bei unterschiedlichen Reibungskoeffizienten kommt es nicht zu einem Durchrutschen der Räder, es findet eine kontrollierte Drehzahlverteilung statt, außerdem existiert eine Überlastsicherung. Mit der Getriebeanordnung lässt sich ein permanenter Zwei- oder Mehrradantrieb verwirklichen, ohne die Beweglichkeit des Fahrzeuges zu beeinflussen. Die Antischlupf-Regelung kann dabei entfallen. Überdies ist ein Eingriff in die Bremshydraulik bei Traktionsverlust eines oder mehrerer Räder nicht notwendig. Über die Fahrzeugelektronik kann die Getriebeanordnung auch direkt zu Fahrzeugstabilisierung herangezogen werden. Die erfindungsgemäße Getriebeanordnung macht auch keine Druckpumpe erforderlich, da lediglich eine Speisepumpe im geschlossenen Kreislauf oder ein Ölsumpf im offenen Kreislauf erforderlich ist. Als Speisepumpe kann beispielsweise der Lenkungsrücklauf verwendet werden. Außerdem können bekannte Daten und Werte von herkömmlichen Antischlupf-Regelung und/oder dem Antiblockiersystem, deren Funktion jetzt die Getriebeanordnung erfüllt, für die Steuereinrichtung übernommen werden.

Durch Einsatz der erfindungsgemäßen Getriebeanordnung kann auch die bisher an Fahrzeugen verwendete Einzelradbremse entfallen und durch eine zentrale fluidgekühlte Bremseinheit ersetzt werden. Eine solche Bremsanlage hält im Prinzip ein Autoleben lang, sie entwickelt, wie bereist erwähnt, keinen Bremsstaub und es werden ca. 50% der gesamten ungefederten Masse eingespart, was insgesamt zu einer Gewichtsreduzierung des Fahrzeugs führt. Denkbare Einsatzgebiete für die Getriebeanordnungen können PKW, Sportwagen, Off Road Fahrzeuge, LKW, aber auch Landmaschinen, Industriemaschinen, Stapler, Baumaschinen oder Spezialfahrzeuge sein.

Die Erfindung wird nachstehend anhand von Ausführungsbeispielen in der Zeichnung näher erläutert. In teilweise schematisierter Darstellung zeigen hierbei die
- Fig.1: eine geschnittene Seitenansicht einer ersten Ausführungsform der Getriebeanordnung mit einem Verzweigungsgetriebe;
- Fig.2: eine geschnittene Draufsicht von oben auf eine weitere Ausführungsform der Getriebeanordnung mit einem zwei Rotoren aufnehmenden Hubgehäuse;
- Fig.3: eine schematische Draufsicht auf eine Ausführungsform der Getriebeanordnung, die an beiden Fahrzeugachsen je ein Verzweigungsgetriebe aufweist;
- Fig.4: eine schematische Draufsicht auf eine Getriebeanordnung an einem Fahrzeug mit der Steuer-einrichtung und Sensoreinrichtung mit verschiedenen Sensoren;
- Fig.5: eine schematisierte Ansicht der Fluidsteuerung;
- Fig.6: eine schematisierte Ansicht einer Option der Fluidsteuerung bei energielosem Fahrzeug;
- Fig.7: eine schematisierte Ansicht eines Fahrzeugs mit einer Bremseinrichtung nach dem Stand der Technik;
- Fig.8: eine schematisierte Ansicht eines Fahrzeugs mit einer am Antriebsstrang des ,Fahrzeugs angeordneten Bremseinrichtung;
- Fig.9: eine Übersicht über verschiedene Lenkungsarten von Fahrzeugen und ihre Ablauflinien bei Kurvenfahrten;
- Fig.10: eine teilgeschnittene Seitenansicht einer Ausführungsform der Getriebeanordnung.

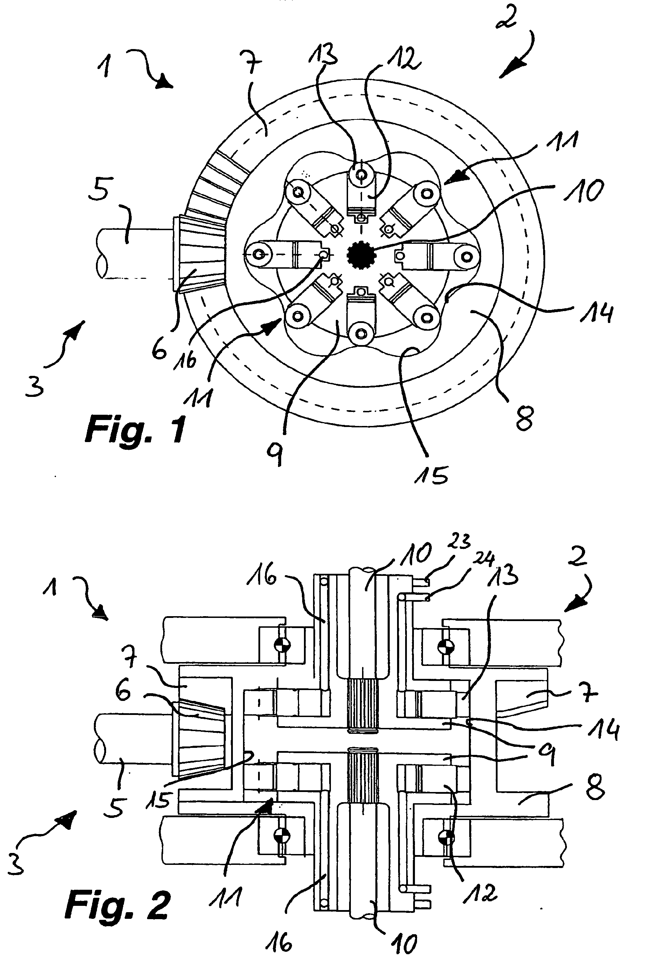

In der Fig.1 ist zunächst ein Verzweigungsgetriebe 2 einer im Ganzen mit 1 bezeichnete Getriebeanordnung zu sehen, die am Antriebsstrang 3 eines nicht weiter dargestellten Landfahrzeugs 4 angeordnet ist, das eine Mehrzahl von Rädern aufweist. Zu erkennen ist die Antriebswelle 5 des Fahrzeugs, an deren sichtbarem Ende ein Kegelrad 6 angeordnet ist, dessen Zähne mit den Zähnen eines Tellerrades 7 bei Drehbewegung der Antriebswelle 5 kämmen. Die hierdurch verursachte Drehbewegung des Tellerrades 7 bewegt das Hubgehäuse 8 mit.

Das Hubgehäuse 8 weist einen sich über seinen Umlauf ändernden Querschnitt auf, so dass an seinem Innenrand Nocken 14 ausgebildet sind. Im Innern des Hubgehäuses 8 ist ein Rotor 9 angeordnet, der zentral von einer Achswelle 10 durchgriffen ist, an deren nicht sichtbarem, dem Betrachter abgewandtem Ende das anzutreibende Rad angeordnet ist. Der Rotor 9 weist acht gleichmäßig beanstandete, radial angeordnete Kolben-Zylinder-Anordnungen 11 auf, an deren dem Innenrand des Hubgehäuses 8 zugewandtem Ende eines Kolbens 12 sich jeweils eine koaxial zu der Achswelle gelagerte Rolle 13 befindet. Auf den Rollen 13 rollt sich der Innenrand des Hubgehäuses 8 bei seiner Drehbewegung ab, wobei der Antrieb des Rades durch den sich ändernden Querschnitt des Gehäuses 8, also die Nocken 9 und deren Einwirkung auf die Kolben 12 der Kolben-Zylinder-Anordnungen 11, die entweder mechanisch oder hydraulisch an das Hubgehäuse 8 gedrückt sind, erfolgt. Im vorliegenden Fall ist die Anzahl der Nocken 14 bzw. Hubwellen als einem und der Hubtäler 15 als anderem Totpunkt der Kolbenbewegung ungleich der Anzahl der Kolben. Die Nocken 14 bilden außerdem einen relativ steilen Anlaufwinkel zu den Kolben 12. An dem der Achswelle 10 zugewandten Ende der Kolben-Zylinder-Anordnungen 11 ist jeweils ein in Richtung der Längserstreckung des Rotors 9 verlaufender Druck-Saug-Kanal 16 angeordnet. Entsteht zwischen Hubgehäuse 8 und Rotor 9 eine torsionale Relativbewegung, fördert die Hälfte der Kolben 12 Flüssigkeit, während die andere Hälfte Flüssigkeit ansaugt. Gleiches gilt bei einer Relativbewegung der Rotoren 9 zueinander. Die Druck- und Saugkanäle 16 werden über eine nicht dargestellte Steuerscheibe zusammengefasst und es entsteht jeweils ein Saug- und ein Druckkanal. Saug- und Druckseite wechseln mit der Drehrichtung.

In der Fig.2 ist eine Getriebeanordnung 1 mit einem Verzweigungsgetriebe 2 zu erkennen, die prinzipiell derjenigen aus der Fig.1 ähnelt, bei welcher aber zwei Rotoren 9 in einem gemeinsamen Hubgehäuse 8 aufgenommen sind. Das Hubgehäuse 8 wird, wie bereits in Fig.1 zu sehen, über ein Kegelrad 6 angetrieben. Im Innern des Hubgehäuses 8 befinden sich zwei Rotoren 9, von denen einer mit der einen (linken) Achswelle 10 und der andere mit der andern (rechten) Achswelle 10 verbunden ist. Jeder Rotor 9 nimmt erneut eine Anzahl von Kolben-Zylinder-Anordnungen 11 von mit Rollen 13 versehenen Kolben 12 auf. Die Anzahl der Hubtäler 15 des Hubgehäuses 8 kann erneut sowohl gleich als auch ungleich der Anzahl der Kolben 12 bzw. der Kolben-Zylinder-Anordnungen 11 sein. Grundsätzlich wäre hierbei als Kolben-Zylinder-Anordnung 11 jede Art von Fluid-Verdrängungs-pumpe verwendbar. Die Kolbenversion eignet sich jedoch besonders, da ihr Leckölanteil sehr gering ist und somit gerade in der starren Verbindung sowie bei sehr langsam drehenden Rädern oder bei der Druckerfassung ideale Voraussetzungen bietet. Die Anzahl der Kolben 12 ist beliebig, je nach dem, wo die Konstruktionsschwerpunkte liegen.

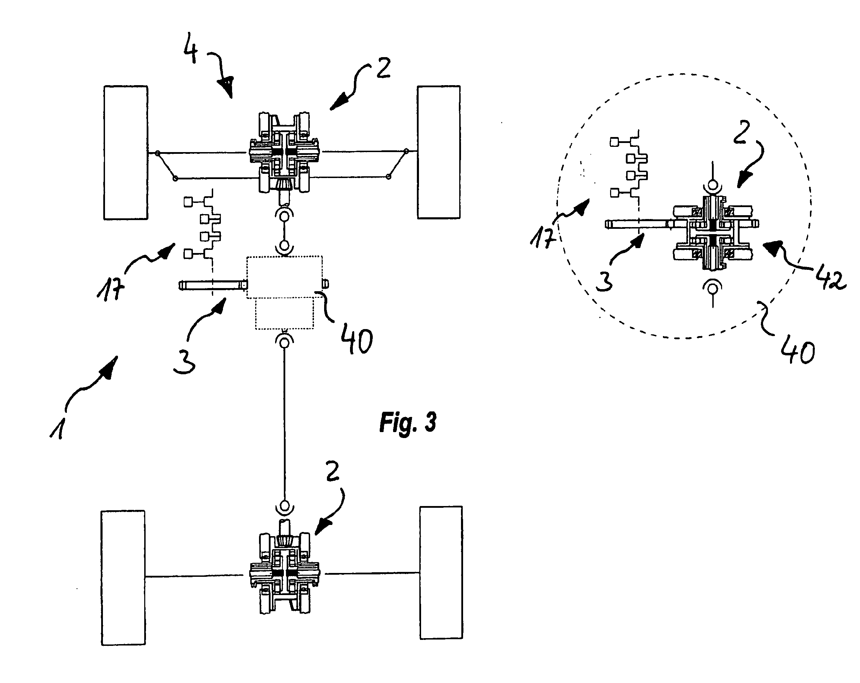

In der Fig.3 ist ein an seiner Vorderachse gelenktes Landfahrzeug 4 mit der erfindungsgemäßen Getriebeanordnung 1 zu erkennen, bei welcher die von einem Motor 17 zur Verfügung gestellte Antriebskraft auf einen Antriebsstrang 3 geleitet wird. Ein jeweils im Bereich der Vorder- und der Hinterachse des Landfahrzeugs 4 angeordnetes Verzweigungsgetriebe 2 verteilt die Kraft anschließend auf die einzelnen angetriebenen Räder. Die Verzweigungsgetriebe 2 der Getriebeanordnung 1 funktionieren hierbei wie oben bereits zu den Fig.1 und 2 beschrieben.

Eine optionale Komponente der Getriebeanordnung 1 wird durch den abtriebsseitig an dem Antriebsstrang 3 dargestellten strichlinierten Bereich 40 gebildet, dessen Details im rechten Bereich der Fig.3 zu erkennen sind. Das dort dargestellte Verteilergetriebe 42, welches die Antriebskraft in Richtung der Achsen verteilt, kann auch als Verzweigungsgetriebe 2 ausgebildet sein, im Falle der Auslegungen der Achsgetriebe als Verzweigungsgetriebe 2 ist dies jedoch nicht notwendig.

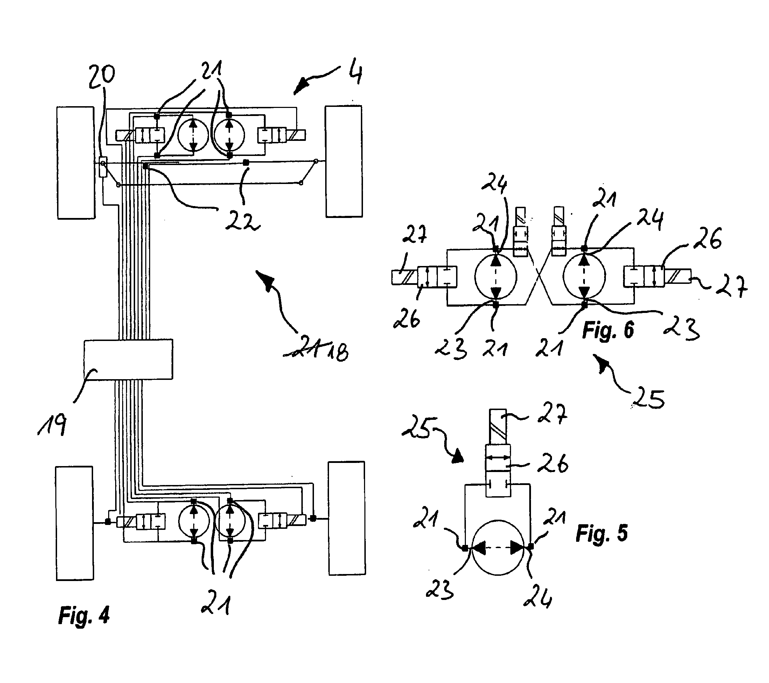

In der Fig.4 ist das Landfahrzeug der Fig.3 mit seiner Sensoreinrichtung 18 und seiner Steuereinrichtung 19 dargestellt. Die Sensoreinrichtung 18 weist dabei eine Vielzahl von Sensoren 20, 21, 22 auf, nämlich Drehwinkelsensoren 20, Drucksensoren 21 und Drehzahlsensoren 22. Die in der Darstellung der Fig.2 mit 23 und 24 bezeichneten Anschlüsse der Verbindungseinrichtungen 16 sind mit Drucksensoren 21 versehen während die dortigen Rotoren 9 mit Drehzahlsensoren 22 ausgestattet sind. Somit kann die Drehzahl und das Drehmoment jedes einzelnen Rades erfasst werden. Die elektronische Steuereinrichtung 19 erkennt somit unterschiedliche Drehmomente an den Rädern obwohl diese noch mit gleicher Drehzahl arbeiten, beispielsweise beim Fahren am Hang, in Schichtlinie oder bei Seitenwind. Obwohl der Fahrer das Lenkrad nicht verändert fährt das Fahrzeug auch bei extremem Seitenwind gerade aus.

In der Fig. 5 ist die Verbindung der beiden Kanäle der Verbindungseinrichtung 16 (Druck- und Saugkanal) erkennbar, die über eine Steuerelement 25 der Steuereinrichtung 19 verbindbar sind, das mit einem hydraulischen Mengenregler 26 und einem Proportionalventil 27 versehen ist. Im Geradeauslauf des Fahrzeugs ist die Verbindung zwischen den Anschlüssen 23, 24 gesperrt und das Hubgehäuse 8 und der Rotor 9 bilden eine starre Einheit. Bei Kurvenfahrt wird der entsprechende Lenkeinschlag über einen Drehwinkelsensor 20 in der Fig. 4 erfasst und an die Steuereinrichtung 19 geleitet. Die Radablauflinien werden berechnet und der elektrisch proportionale Mengenregler 26 derart beeinflusst, dass die zur Drehzahlreduzierung notwendige Fluidmenge von Anschluss 23 nach Anschluss 24 oder umgekehrt fließen kann. Die Drehzahl des äußeren Rades entspricht dabei der Drehzahl des Hubgehäuses. Die Drehzahl des inneren Rades wird um die Drehzahldifferenz zwischen Hubgehäuse und dem Rotor der entsprechenden Seite verringert. An jeder Antriebswelle 5 befindet sich ein Drehzahlsensor 22 (wie er an jeder ABS zu finden ist). An jedem Anschluss 23, 24 der Rotoren 9 aus der Fig. 2 befindet sich ein Drucksensor 21. Die Elektronik ist somit in der Lage, die Drehzahl und das anstehende Drehmoment jedes einzelnen Rades zu erfassen und zu verarbeiten. Das System bedarf keiner Druckölversorgung. Je nach Auslegung ist eine Versorgung mit Speisefluid von Vorteil, wobei dazu der Rücklauf der hydraulischen Lenkung genügt. In Teilbereichen der Fahrzeug- oder Industrietechnik wäre auch der Betrieb mit Kraftstoffen, insbesondere mit schmierfähigen Kraftstoffen, denkbar.

In der Fig.6 ist eine Schaltoption der Steuerelemente 25 der Fig. 4 und 5 gezeigt. Bei dieser Option können in dem stromlos gezeigten Zustand der Steuerelemente 25 die einzelnen Räder des Fahrzeugs 4 bei freigeschalteter Getriebeanordnung 1 frei drehen. Diese Option kann beispielsweise beim Abschleppen des Fahrzeugs mit stillstehendem Antriebsmotor sinnvoll sein. Da diese Ventilvariante des Steuerelements 25 stromlos geöffnet ist, schaltet sich dieser Zustand bei Stromverlust automatisch ein.

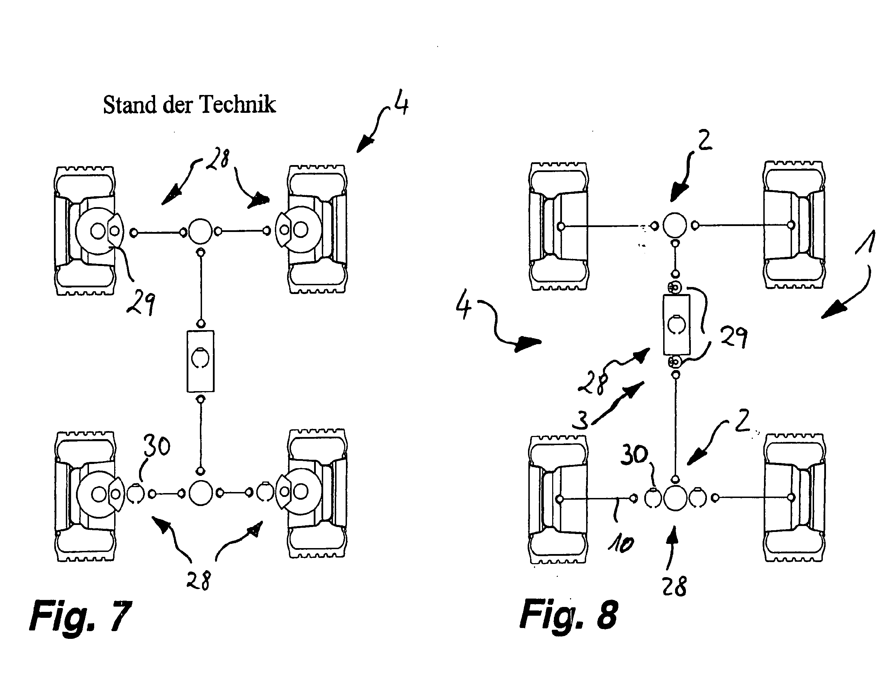

In den Fig. 7 und 8 sind Landfahrzeuge 4 mit Getriebeanordnung 1 gezeigt, wobei das Fahrzeug der Fig.7 eine Bremseinrichtung 28 nach dem Stand der Technik aufweist, bei der Einzelradbremsen vorgesehen, die jedes Rad im Betrieb einzeln bremsen und bei denen an der Hinterachse im Bereich der Räder zusätzlich Feststellbremsen 30 vorgesehen sind. Demgegenüber zeigt die Fig. 8 ein Landfahrzeug 4 mit erfindungsgemäßer Getriebeanordnung 1, bei welchem an der Getriebeanordnung 1 eine Bremseinrichtung 28 integriert ist, so dass im Betrieb der Bremsvorgang nicht an den Rädern, sondern am Antriebstrang 3 vonstatten geht. Da bei der erfindungsgemäßen Getriebeanordnung 1 jede Achse über ein Verzweigungsgetriebe 2 angetrieben ist, erfolgt eine kontrollierte Verteilung der Drehzahlen an die Achswellen 10 rechts und links. Die dargestellte Getriebebremse wird durch diese kontrollierte Abhängigkeit jedes angetriebenen Rades ermöglicht, die ein kontrolliertes Radverhalten auch bei einer Abbremsung über den Antriebsstrang 3 gewährleistet und ein um das Übersetzungsverhältnis des Kegel-Tellerrades geringeres Drehmoment als die Bremseinrichtungen 28 der Fig.7 abzubremsen hat. In der Fig.8 sind überdies im Bereich der hinteren Achswellen 10 ausgangs des dortigen Verzweigungsgetriebes 2 Feststellbremsen 30 des Fahrzeugs 4 dargestellt.

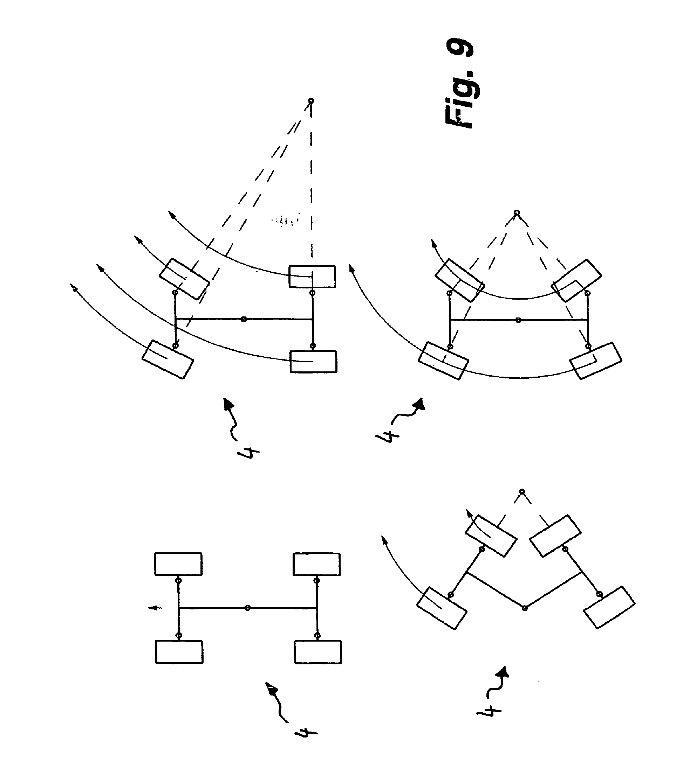

Zur Verdeutlichung der vorstehend beschriebenen Sachverhalte sind in der Fig.9 die Radablauflinien verschiedener Lenkungsarten von Landfahrzeugen 4 dargestellt, nämlich für den Betrachter in der Darstellung oben links ein Fahrzeug 4 in Geradeausfahrt, unten links ein knickgelenktes Fahrzeug 4. Den beiden rechten Teilfiguren lässt sich entnehmen, dass ein Fahrzeug 4 mit Vorderradlenkung in Kurvenfahrt für jedes Rad eine eigene Radablauflinie existiert (rechts oben), während bei einem Fahrzeug 4 (rechts unten) mit Allradlenkung bei Kurvenfahrt zwei Radablauflinien genügen können, da hierbei die Räder einer Fahrzeugseite auf einer Linie ablaufen können (aber natürlich nicht müssen).

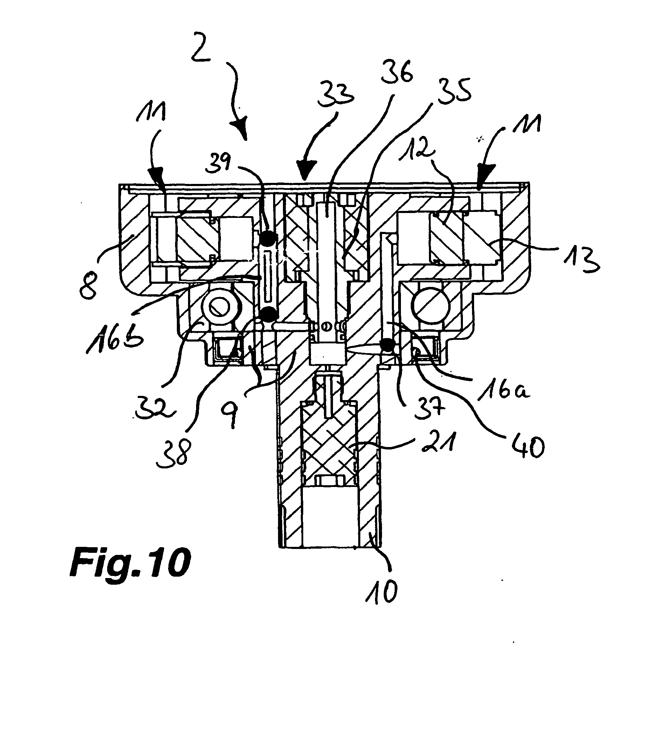

In der Fig.10 ist ein Teil einer Ausführungsform eines verzweigungsgetriebes 2 mit einem in dem Hubgehäuse 8 über Kugellager 32 drehbar gelagerte Rotor 9 gezeigt, der einstückig mit der für den Betrachter axial nach unten fortgesetzten Achswelle 10 verbunden ist. Ebenso sind in der Fig.10 die Kolben-Zylinder-Anordnungen 11 mit Kolben 12 und Rollen 13 zu erkennen, wobei die Stirnseiten der Zylinder der Kolben-Zylinder-Anordnungen mit zum Anschluss an die Verbindungseinrichtungen 16 vorgesehenen, nicht weiter dargestellten Öffnungen, zwei pro Zylinder, versehen sind. Von der für den Betrachter rechten Kolben-Zylinder-Anordnung 11 führt zunächst kurz radial, sodann nach unten axial und schließlich wieder radial ein Druckkanal 16a zu einem zwischen den Kolben-Zylinder-Anordnungen angeordneten axialen Mittelstück 33 des Rotors 9. Die für den Betrachter linke Kolben-Zylinder-Anordnung 11 ist über einen ganz ähnlich verlaufenden Saugkanal 16b mit diesem Mittelstück 33 verbunden. In das erwähnte Mittelstück 33 ist eine Patrone 35 mit einem runden Hohlkolben 36 eingeführt, die ein elektrisches Proportionalventil bildet und die ansonsten an dem Mittelstück 33 freie Verbindung zwischen Druck- und Saugseite zunächst sperrt. Durch das Ventil kann die Verbindung zwischen Druck- und Saugseite freigegeben werden. An Druck- und Saugkanal 16a, 16b sind Druck- und Saugventile 37, 38, 39 zu erkennen, die mit zugeordneten Kugeln Rückschlagventile bilden. Bei schnell laufenden Fahrzeugen müssen diese Kugeln in axialen Bohrungen der Verbindungseinrichtungen 16 geführt sein, um sich bei zunehmender Winkelbeschleunigung in dieser Bohrung abrollen zu können, weswegen bei solchen Fahrzeugen eine radiale Anordnung
Der Bohrungen zu einer Fehlfunktion des Ventils führen würde. Das Proportionalventil mit Patrone 35 und Hohlkolben 36 regelt nach Bedarf den Durchfluss zwischen den Ventilen 37, 38 der Druck- bzw. Saugseite ohne dass eine Steuerscheibe oder eine Verbindungsleitung notwendig wäre. Lecköl, das zwischen Kolben 12 und den jeweils zugeordneten Zylindern entweicht, kann über ein Saugventil 39 nachgesaugt werden, das auch zur Erstbefüllung mit der hydraulischen Flüssigkeit genutzt werden kann. Der komplette Rotor 9 der Fig. 10 dreht sich mit der entsprechenden Drehzahl der Achswelle 10, wobei es keine torsionale Verschiebung innerhalb des Rotors gibt, weshalb, selbst wenn in der Fig.10 zwischen Hubgehäuse 8 und Rotor 9 ein radialer Wellendichtring zu erkennen ist, in der Regel auch keine dynamischen Abdichtungen erforderlich sind. Überdies ist in der Fig.10 in einem flanschartigen Bereich des Rotors 9 bzw. der Achswelle 10 ein Drucksensor zu erkennen.

## Patentansprüche

1. Getriebeanordnung (1), welche an einem Antriebsstrang (3) eines Landfahrzeugs oder dergleichen Fortbewegungsmittels angeordnet ist, das eine Mehrzahl von Rädern aufweist, von denen wenigstens zwei antreibbar sind, welche mit wenigstens einem Verzweigungsgetriebe (2) versehen ist, das jedes der antreibbaren Räder einzeln antreibt oder bremst, und welcher eine Sensoreinrichtung (18) mit wenigstens einem Sensor (20, 21, 22) und eine Steuereinrichtung (19) zugeordnet ist, die anhand von durch die Sensoreinrichtung (18) erfassten, durch Lenkmanipulation bei der Fortbewegung des Fahrzeugs verursachten Werten das Verzweigungsgetriebe (2) derart steuert, dass jedes Rad mit einer Drehzahl angetrieben wird, bei welcher es unter Beibehaltung des Drehmoments schlupffrei und geometrisch korrekt abläuft, wobei an einer angetriebenen Achse des Fahrzeugs (4) wenigstens ein mit dem Antriebsstrang (3) verbundenes, und um zumindest eine einem Rad zugeordnete Achswelle (10) drehbares Hubgehäuse (8) vorgesehen ist, welches einen im wesentlichen kreisförmigen oder elliptischen Außenumfang aufweist, wobei das wenigstens eine Hubgehäuse (8) an seinem Innenrand eine Mehrzahl von durch den sich ändernden Querschnitt des Innenrandes des Hubgehäuses gebildete Nocken (14) aufweist, die durch die Drehbewegung des Hubgehäuses (8) eine Mehrzahl von mit der jeweiligen Achswelle (10) über einen diese umgreifenden Rotor (9) verbundene Kolben-Zylinder-Anordnungen (11) antreiben, und wobei die Kolben-Zylinder-Anordnungen (11) über, in den Rotoren (9) vorgesehene sowie Druck- und Saugventile (37,38,39) aufweisende Druck- und Saugkanäle (16a, 16b) derart miteinander verbunden sind, dass mittels der Kolben-Zylinder-Anordnungen (11) bei einer torsionalen Relativbewegung zwischen Hubgehäuse (8) und Rotor (9) der Getriebeanordnung (1) oder einer Relativbewegung zweier Rotoren (9) zueinander Flüssigkeit entweder förderbar oder ansaugbar ist, **dadurch gekennzeichnet, dass** die an den Druck- und Saugkanälen (16a, 16b) vorgesehenen Druck- und Saugventile (37,38,39) mit zugeordneten Kugeln Rückschlagventile bilden, welche Kugeln in axialen Bohrungen der Druck- und Saugkanäle (16a, 16b) geführt sind, dass die Rotoren (9) von Druck- und Saugkanälen (16a, 16b) zumindest teilweise entlang von deren Längserstreckung durchgriffen sind, dass an der einem axialen Mittelstück (33) des Rotors (9) zugewandten Stirnseite des Zylinders jeder Kolben-Zylinder-Anordnung (11) zwei Öffnungen zum Anschluss an je einen Druck- und einen Saugkanal (16a, 16b) vorgesehen sind und dass in einem Hohlraum des axialen Mittelstücks (33) ein elektrisches Proportionalventil (27) vorgesehen ist, dass die im Hohlraum mündenden Druck- und Saugkanäle (16a, 16b) zu jeweils einem Kanal verbindet.

2. Getriebeanordnung nach Anspruch 1, **dadurch gekennzeichnet, dass** der Ausgleich einer Drehzahldifferenz der Räder einer Achse an dem Verzweigungsgetriebe (2) hydromechanisch erfolgt.

3. Getriebeanordnung nach einem der Ansprüche 1 oder 2, **dadurch gekennzeichnet, dass** jeder einem Rad zugeordneten Achswelle (10) ein eigenes drehbares Hubgehäuse (8) zugeordnet ist, wobei die Hubgehäuse (8) jeweils einer Achse mit der gleichen Drehzahl angetrieben sind.

4. Getriebeanordnung nach einem der Ansprüche 1 bis 3, **dadurch gekennzeichnet, dass** den Rädern einer angetriebenen Achse ein gemeinsames Hubgehäuse (8) zugeordnet ist.

5. Getriebeanordnung nach einem der vorhergehenden Ansprüche, **dadurch gekennzeichnet, dass** die Form der Nocken (14) so vorgesehen ist, dass der Umsatz von kinetischer Energie in hydraulische Energie minimal ist.

6. Getriebeanordnung nach einem der vorhergehenden Ansprüche, **dadurch gekennzeichnet, dass** die Verbindungseinrichtungen (16) über ein Steuermittel, insbesondere eine Steuerscheibe, manipulierbar zusammenfassbar sind.

7. Getriebeanordnung nach einem der vorhergehenden Ansprüche, **dadurch gekennzeichnet, dass** die Druck- und die Saugkanäle (16a, 16b) durch ein ihnen jeweils zugeordnetes Steuermittel, insbesondere einen Steuerschieber (35) zusammenfassbar sind.

8. Getriebeanordnung nach einem der vorhergehenden Ansprüche, **dadurch gekennzeichnet, dass** die Verbindungseinrichtungen (16) mit wenigstens einem Sensor (20, 21, 22), insbesondere einem Drucksensor (21), zur Erfassung des an dem jeweiligen Rad anliegenden Drehmoments versehen sind.

9. Getriebeanordnung nach einem der vorhergehenden Ansprüche, **dadurch gekennzeichnet, dass** an dem Fahrzeug (4) wenigstens eine, einer oder mehreren Achsen zugeordnete Bremseinrichtung (28) am Antriebsstrang (3) angeordnet ist, welche bevorzugt die einzige Bremseinrichtung (28) des Fahrzeugs (4) bildet.

10. Getriebeanordnung nach einem der vorhergehenden Ansprüche, **dadurch gekennzeichnet, dass** die Bremseinrichtung (28) wenigstens eine, zumindest einer angetriebenen Achse zugeordnete, in einem dieser Achse zugeordneten Bereich des Antriebsstrangs (3) angeordnete Betriebsbremse (29) aufweist.

11. Getriebeanordnung nach Anspruch 10, **dadurch gekennzeichnet, dass** die Bremseinrichtung (28) für jede angetriebene Achse in dem zugeordneten Bereich des Antriebsstrangs (3) eine Betriebsbremse (29) aufweist.

12. Getriebeanordnung nach einem der vorhergehenden Ansprüche, **dadurch gekennzeichnet, dass** die Bremseinrichtung (28) wenigstens eine Feststellbremse (30) aufweist, die an einer Achse des Fahrzeugs (4) im Bereich des dieser Achse zugeordneten Verzweigungsgetriebes (2) angeordnet ist.

13. Getriebeanordnung nach einem der vorhergehenden Ansprüche, **dadurch gekennzeichnet, dass** die Bremseinrichtung durch eine fluidgekühlte Scheibenbremse gebildet ist.

14. Verwendung einer Getriebenanordnung (1) nach einem der vorhergehenden Ansprüche in einem Achsgetriebe, einem Verteilergetriebe, einem insbesondere stufenlosen Untersetzungsetriebe, als eine Kupplung oder als Drehmomentverstärker.

## Claims

1. Transmission arrangement (1) which is mounted on a power train (3) of a land vehicle or similar transportation means, comprising a plurality of wheels, at least two of which are driveable, which is provided with at least one branching transmission (2) that drives or brakes each of the driveable wheels individually, and which has an associated sensor device (18) with at least one sensor (20, 21, 22) and a control device (19) which controls the branching transmission (2) by means of variables detected by the sensor device (18) and produced by manipulation of the steering during the travel of the vehicle, such that each wheel is driven at a speed at which it runs in a non-slip and geometrically correct manner while maintaining the torque, while on a driven axle of the vehicle (4) is provided at least one lifting housing (8) that is connected to the power train (3) and is rotatable about at least one axle shaft (10) associated with a wheel, said housing having a substantially circular or elliptical outer periphery, while the at least one lifting housing (8) comprises on its inner edge a plurality of cams (14) formed by the varying cross-section of the inner edge of the lifting housing, said cams, through the rotary movement of the lifting housing (8), driving a plurality of piston-cylinder arrangements (11) that are connected to the respective axle shaft (10) via a rotor (9) that surrounds the latter, and wherein the piston-cylinder arrangements (11) are connected to one another via pressure and suction channels (16a, 16b) provided in the rotors (9) and comprising pressure and suction valves (37, 38, 39), such that during a torsional relative movement between the lifting housing (8) and rotor (9) of the transmission arrangement (1) or a relative movement of two rotors (9) to one another, liquid can be either delivered or aspirated by means of the piston-cylinder arrangements (11), **characterised in that** the pressure and suction valves (37, 38, 39) provided on the pressure and suction channels (16a, 16b), together with associated balls, form nonreturn valves, these balls being guided in axial bores of the pressure and suction channels (16a, 16b), **in that** the rotors (9) are penetrated by pressure and suction channels (16a, 16b) at least partly along their longitudinal extent, **in that** two openings each for connection to a pressure and a suction channel (16a, 16b) are provided on the end face of the cylinder facing an axial middle section (33) of the rotor (9), and **in that** an electrical proportional valve (27) is provided in a cavity of the axial central section (33), said valve (27) connecting the pressure and suction channels (16a, 16b) opening into the cavity to a channel in each case.

2. Transmission arrangement according to claim 1, **characterised in that** a difference in the speed of the wheels on one axle is compensated hydromechanically on the branching transmission (2).

3. Transmission arrangement according to one of claims 1 or 2, **characterised in that** each axle shaft (10) associated with a wheel has its own associated rotatable lifting housing (8), the lifting housings (8) of each axle being driven at the same speed.

4. Transmission according to one of claims 1 to 3, **characterised in that** a common lifting housing (8) is associated with the wheels of a driven axle.

5. Transmission arrangement according to one of the preceding claims, **characterised in that** the shape of the cams (14) is such that the conversion of kinetic energy into hydraulic energy is minimal.

6. Transmission arrangement according to one of the preceding claims, **characterised in that** the connecting devices (16) can be combined so as to be capable of being manipulated by a control means, particularly a control disc.

7. Transmission arrangement according to one of the preceding claims, **characterised in that** the pressure and suction channels (16a, 16b) can be combined by means of a control means associated with them, particularly a control slide valve (35).

8. Transmission arrangement according to one of the preceding claims, **characterised in that** the connecting devices (16) are provided with at least one sensor (20, 21, 22), particularly a pressure sensor (21), for detecting the torque applied to the respective wheel.

9. Transmission arrangement according to one of the preceding claims, **characterised in that** on the vehicle (4) is mounted at least one braking device (28) on the power train (3), said device (28) being associated with one or more axles, and preferably forming the only braking device (28) of the vehicle (4).

10. Transmission arrangement according to one of the preceding claims, **characterised in that** the braking device (28) has at least one operating brake (29) associated with at least one driven axle and arranged in a region of the power train (3) associated with this axle.

11. Transmission arrangement according to claim 10, **characterised in that** the braking device (28) comprises an operating brake (29) for each driven axle in the associated region of the power train (3).

12. Transmission arrangement according to one of the preceding claims, **characterised in that** the braking device (28) comprises at least one holding brake (30) which is arranged on an axle of the vehicle (4) in the region of the branching transmission (2) associated with this axle.

13. Transmission arrangement according to one of the preceding claims, **characterised in that** the braking device is formed by a fluid-cooled disc brake.

14. Use of a transmission arrangement (1) according to one of the preceding claims in an axle gear, a transfer gear, an in particular infinitely variable reduction gear, as a clutch or as a torque amplifier.

## Revendications

1. Système de transmission (1), qui est disposé dans une chaîne cinématique (3) d'un véhicule routier ou d'un moyen de déplacement similaire présentant une pluralité de roues dont au moins deux peuvent être entraînées, qui est pourvu d'au moins une transmission à répartition de puissance (2) qui entraîne ou freine individuellement chacune des roues pouvant être entraînées, et auquel sont associés un dispositif de détection (18) doté d'au moins un capteur (20, 21, 22) et un dispositif de commande (19) qui, à l'aide de valeurs engendrées par des manoeuvres de direction lors de la marche du véhicule et détectées par le dispositif de détection (18), commande la transmission à répartition de puissance (2) de telle sorte que chaque roue est entraînée à une vitesse de rotation à laquelle elle roule de manière géométriquement correcte et sans patinage tout en maintenant le couple, sachant qu'il est prévu, sur un essieu moteur du véhicule (4), au moins un boîtier de levée (8) relié à la chaîne cinématique (3) et rotatif autour d'au moins un arbre d'essieu (10) associé à une roue, boîtier qui présente une circonférence extérieure sensiblement circulaire ou elliptique, sachant que le boîtier de levée au moins unique (8) présente sur son bord intérieur une pluralité de cames (14) formées par la section variable du bord intérieur du boîtier de levée, cames qui, par le mouvement de rotation du boîtier de levée (8), entraînent une pluralité d'ensembles piston-cylindre (11) reliés à l'arbre d'essieu respectif (10) par l'intermédiaire d'un rotor (9) entourant ce dernier, et sachant que les ensembles piston-cylindre (11) sont, par l'intermédiaire de canaux de refoulement et d'aspiration (16a, 16b) prévus dans les rotors (9) et présentant des soupapes de refoulement et d'aspiration (37, 38, 39), reliés entre eux de telle sorte qu'au moyen des ensembles piston-cylindre (11), lors d'un mouvement relatif de torsion entre le boîtier de levée (8) et le rotor (9) du système de transmission (1) ou d'un mouvement relatif de deux rotors (9) l'un par rapport à l'autre, du liquide peut être soit refoulé soit aspiré, **caractérisé en ce que** les soupapes de refoulement et d'aspiration (37, 38, 39) prévues sur les canaux de refoulement et d'aspiration (16a, 16b) forment avec des billes associées des clapets anti-retour, ces billes étant guidées dans des perçages axiaux des canaux de refoulement et d'aspiration (16a, 16b), **en ce que** les rotors (9) sont traversés par des canaux de refoulement et d'aspiration (16a, 16b) au moins partiellement le long de leur étendue longitudinale, **en ce que** deux ouvertures, destinées au raccordement respectivement à un canal de refoulement et un canal d'aspiration (16a, 16b), sont prévues sur le côté frontal du cylindre de chaque ensemble piston-cylindre (11) qui est tourné vers une partie centrale axiale (33) du rotor (9), et **en ce qu'**un distributeur proportionnel (27) à commande électrique est prévu dans une cavité de la partie centrale axiale (33), distributeur qui relie à un canal respectif les canaux de refoulement et d'aspiration (16a, 16b) débouchant dans la cavité.

2. Système de transmission selon la revendication 1, **caractérisé en ce que** la compensation d'une différence de vitesse de rotation des roues d'un essieu s'effectue de manière hydromécanique au niveau de la transmission à répartition de puissance (2).

3. Système de transmission selon la revendication 1 ou 2, **caractérisé en ce qu'**un propre boîtier de levée rotatif (8) est associé à chaque arbre d'essieu (10) associé à une roue, sachant que les boîtiers de levée (8) d'un essieu respectif sont entraînés à la même vitesse de rotation.

4. Système de transmission selon l'une des revendications 1 à 3, **caractérisé en ce qu'**un boîtier de levée commun (8) est associé aux roues d'un essieu moteur.

5. Système de transmission selon l'une des revendications précédentes, **caractérisé en ce que** la forme des cames (14) est prévue de telle sorte que la conversion d'énergie cinétique en énergie hydraulique est minimale.

6. Système de transmission selon l'une des revendications précédentes, **caractérisé en ce que** les organes de liaison (16) peuvent être manoeuvrés d'une manière regroupée à l'aide d'un moyen de commande, en particulier d'un plateau de commande.

7. Système de transmission selon l'une des revendications précédentes, **caractérisé en ce que** les canaux de refoulement et d'aspiration (16a, 16b) peuvent être regroupés par un moyen de commande qui leur est respectivement associé, en particulier un tiroir de commande.

8. Système de transmission selon l'une des revendications précédentes, **caractérisé en ce que** les organes de liaison (16) sont pourvus d'au moins un capteur (20, 21, 22), en particulier un capteur de pression (21), pour détecter le couple de rotation appliqué à la roue respective.

9. Système de transmission selon l'une des revendications précédentes, **caractérisé en ce qu'**au moins un dispositif de freinage (28) associé à un ou plusieurs essieux est disposé dans la chaîne cinématique (3) sur le véhicule (4), dispositif qui constitue de préférence l'unique dispositif de freinage (28) du véhicule (4).

10. Système de transmission selon l'une des revendications précédentes, **caractérisé en ce que** le dispositif de freinage (28) présente au moins un frein de service (29) associé à au moins un essieu moteur et disposé dans une région de la chaîne cinématique (3) qui est associée à cet essieu.

11. Système de transmission selon la revendication 10, **caractérisé en ce que** le dispositif de freinage (28) présente, pour chaque essieu moteur, un frein de service (29) dans la région associée de la chaîne cinématique (3).

12. Système de transmission selon l'une des revendications précédentes, **caractérisé en ce que** le dispositif de freinage (28) présente au moins un frein de stationnement (30), qui est disposé sur un essieu du véhicule (4) dans la région de la transmission à répartition de puissance (2) associée à cet essieu.

13. Système de transmission selon l'une des revendications précédentes, **caractérisé en ce que** le dispositif de freinage est formé par un frein à disque refroidi par fluide.

14. Utilisation d'un système de transmission (1) selon l'une des revendications précédentes dans un pont moteur, une boîte de transfert, une boîte de démultiplication en particulier à variation continue, en tant qu'embrayage ou en tant qu'amplificateur de couple.
